# EUROPÄISCHE PATENTANMELDUNG

(11) **EP 1 101 713 A1**
(43) Veröffentlichungstag der Anmeldung: **23.05.2001**
(21) Anmeldenummer: 00124507.5
(22) Anmeldetag: 09.11.2000
(51) Int. Cl.: B65G 1/137

(54) **Lagerautomat mit Sammelausgabevorrichtung**

(30) Priorität: 17.11.1999 DE 19955450
(71) Anmelder: Westfalia-WST-Systemtechnik GmbH & Co. KG, 33829 Borgholzhausen (DE)
(72) Erfinder: Upmeyer, Ulrich, 33829 Borgholzhausen (DE)
(74) Vertreter: Hanewinkel, Lorenz

(57) **Zusammenfassung**

Die Erfindung betrifft einen Lagerautomaten zum gesteuerten Stapeln und Entnehmen von Päckchen (P), insbesondere Schachteln, aus Stapeln in Regalen (2a, 2b), die benachbart zu einer Gasse angeordnet sind, in dem ein Regalbedienfahrzeug (RFZ) fährt, das in drei Koordinaten gesteuert aufgelieferte Päckchen (P) jeweils auf einen vorbezeichneten Lagerplatz einlagert und bei entsprechendem Abruf vom jeweiligen Stapel (2a, 2b) entnimmt, wobei an den Stapeln (2a, 2b) abseitig des Regalbedienfahrzeuges (RFZ) jeweils ein Fallschacht für jeweils vom Regalbedienfahrzeug (RFZ) herausgeschobene Päckchen (P) durch eine elastische Bespannung (3c, 3d) begrenzt ausgebildet ist, an deren unteren Ende eine Tasche (T) ausgebildet ist, die sich bis über die annähernd senkrechte Bespannung (3c, 3d) hinaus erstreckt, die mit einem Auffangbereich unterhalb des Stapels (2a, 3a) endet, und daß die Tasche (T) durch eine Ent-leerungsvorrichtung (3a, 3b) gesteuert auf einen Querförderer (5a, 5b) auszuleeren ist.

## Beschreibung

Die Erfindung betrifft einen Lagerautomaten zum gesteuerten Stapeln und Entnehmen von Päckchen, insbesondere Schachteln, aus Stapeln in Regalen, die benachbart zu einer Gasse angeordnet sind, in dem ein Regalbedienfahrzeug fährt, das in drei Koordinaten gesteuert aufgelieferte Päckchen jeweils auf einen vorbezeichneten Lagerplatz einlagert und bei entsprechendem Abruf von jeweiligen Stapeln entnimmt.

Es ist bekannt, Regallager mit Regalbedienfahrzeugen zu beschicken und zu entleeren. Dies bedeutet, daß die zu entnehmenden Waren von dem Bedienarm aufgenommen und auf eine Fördervorrichtung abgelegt werden müssen. Dies erfordert Wegezeit des Regalbedienfahrzeuges.

Es ist Aufgabe der Erfindung, die Warenausgabe wesentlich zu beschleunigen und das Regalbedienfahrzeug zu entlasten.

Die Lösung besteht darin, daß an den Stapeln abseitig des Regalbedienfahrzeuges jeweils ein Fallschacht für jeweils vom Regalbedienfahrzeug herausgeschobene Päckchen durch eine elastische Bespannung begrenzt ausgebildet ist, an deren unteren Ende eine Tasche ausgebildet ist, die sich bis über die annähernd senkrechte Bespannung hinaus erstreckt, die mit einem Auffangbereich unterhalb des Stapels endet, und daß die Tasche durch eine Entleerungsvorrichtung gesteuert auf einen Querförderer auszuleeren ist.

Vorteilhafte Ausgestaltungen sind in den Unteransprüchen aufgeführt.

Vorteilhaft wird die Begrenzung des Fallschachtes leicht gegen die Vertikale geneigt gestellt, wobei deren unteres Ende näher als das obere an dem Regal ist. Das untere Ende der Bespannung ist um einen Auslenker geführt und dann zur Tasche geformt, um einen Spanner geführt und an einem Fixierer gehalten, der beabstandet unter dem Regal angeordnet ist.

Oben ist die Bespannung aus Tuch, Netz, Vlies o. dgl. auf einen Wickler gerollt, der steuerbar ist, so daß sich in einer Auffangstellung der Tasche diese tiefer als der Fixierer hängend ausgebildet ist, und in einer Entleerungsstellung diese höher angehoben ist, so daß die gesammelten Päckchen herausrutschen und auf den Querförderer fallen.

Die Tasche ist durch den Auslenker neben die Fallstrecke ausgestellt, so daß herabfallende Päckchen nicht aufeinander fallen.

Aus der Tasche rutschen die Päckchen beim Entleeren über eine Schrägrutsche auf den Querförderer.

Sämtliche Querförderer der einzelnen Fallschächte der verschiedenen Regale mit den Stapeln führen an ihren beiden Enden auf Sammelförderer, die wiederum über Stetigförderer zu Sammelbehältern führen, die jeweils nach Aufnahme eines Kommissionsauftrages auf einer Behälterförderstrecke zu einer Ausgabestelle verbracht werden.

Stirnseitig mehrerer Doppelregale sind parallel zu den Sammelförderern für einen völlig unabhängigen Ein- und Auslagerungsbetrieb weitere Förderbahnen angeordnet, die von dem Regalbedienfahrzeug bedient werden.

Diese Förderer sind auch als redundante Verkehrswege für die parallele Abwicklung von Eilaufträgen und Umlagerungsprozessen zu nutzen. Sie stehen mit dem Sammelförderer in Verbindung.

In den Figuren 1 bis 4 sind vorteilhafte Ausgestaltungen dargestellt.
- Fig. 1: zeigt einen Grundriß eines Abschnittes einer Anlage mit zwei Doppelregalen;
- Fig. 2: zeigt einen Grundriß eines Endabschnittes der Anlage mit einem Doppelregal;
- Fig. 3: zeigt einen Vertikalschnitt A-A durch Fig. 1;
- Fig. 4: zeigt einen Vertikalschnitt B-B durch Fig. 2.

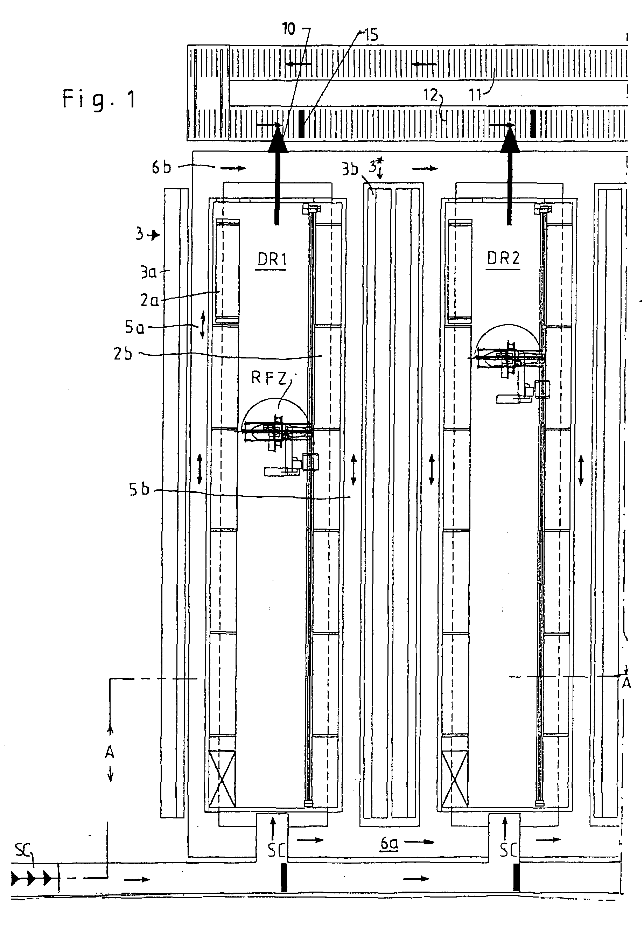

In dem Grundrißabschnitt einer Warenautomatenanlage Fig. 1 sind zwei Doppelregale DR1, DR2 gezeigt, die jeweils beidseitig eines beidseitig arbeitenden Regalbedienfahrzeuges RFZ Warenstapel 2a, 2b aufnehmen. Die Beschickung des Lagers erfolgt in bekannter Weise mit dem Förderer SC, auf dem die Warenpäckchen, Schachteln o. dgl. über Scanner identifiziert aufgegeben werden, wobei das Regalbedienfahrzeug RFZ, wenn die Waren an dem jeweils vorgegebenen Regal DR1, DR2 angekommen ist, diese aufnimmt und in einem von dem zentralen Steuercomputer zugewiesenen Platz in einem der Regale 2a, 2b, etc. ablegt.

Die Ausgabe der Ware erfolgt mit einer neuartigen Anordnung, die eine wesentliche Leistungssteigerung insbesondere in Stoßbetriebszeiten erbringt. Dabei wird ein vom dem Steuercomputer bezeichneter Platz vom Regalfahrzeug angefahren und die Ware oben von dem Stapel herausgeschoben, worauf sie in einer Leit- und Auffangvorrichtung 3, 3* auf ein zum Regal parallelen Querförderer 5a, 5b und von dort je nach der jeweils gewählten Förderrichtung auf einen der stirnseitigen Sammelförderer 6a, 6b weitergegeben und abtransportiert wird.

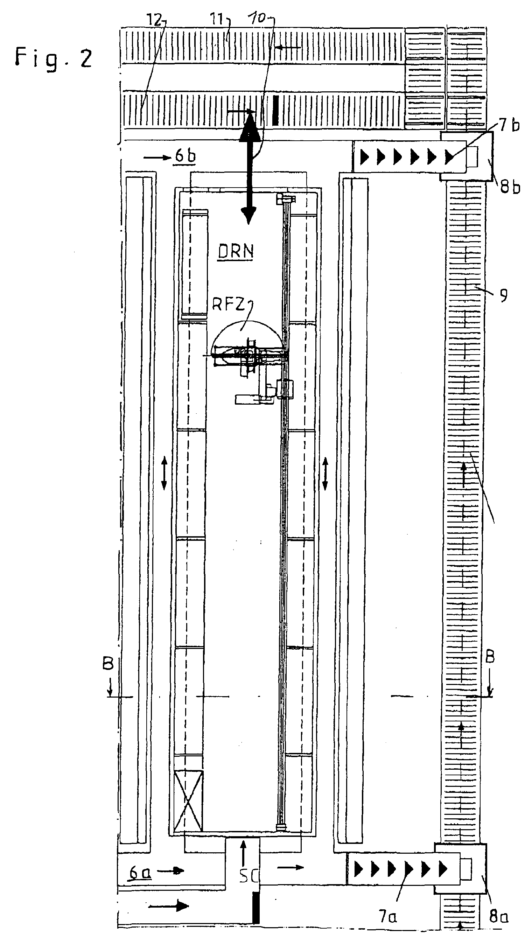

In Fig. 2 ist das Endstück der Anlage im Grundriß gezeigt, wo die Sammelförderer 6a, 6b die Warenpäckchen oder Schachteln über einen jeweils angeschlossenen Stetigförderer 7a, 7b in Kommissionssammelbehälter 8a, 8b übergeben werden. Diese werde über eine Behälterförderstrecke 9 zu einer Ausgabestelle gebracht.

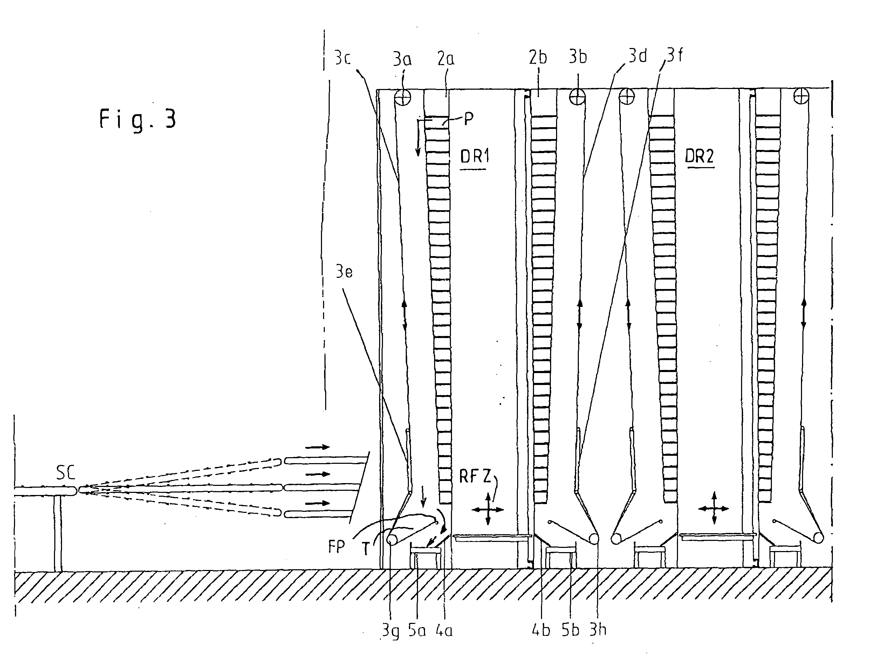

Fig. 3 zeigt einen Vertikalschnitt durch Fig. 1 die Einzelheiten und Funktionsweise der neuen Leit- und Auffangvorrichtungen 3, 3*.

Zwischen dem Wickler 3a und dem Fixierer FP ist ein Tuch, Netz 3c o. dgl. angeordnet, das vorzugsweise mit einem Gewicht 3g unter einer gewissen Spannung gehalten wird. Außerdem ist die Bespannung 3c im unteren Bereich mit einem Auslenker 3e bestückt, der zwischen seinem unteren Ende und dem Fixierer FP eine schräg nach unten, abseitig des Stapels 2a sich erstreckende Tasche T ausbildet, wenn der Wickler 3a die Auffangstellung für die Ware eingestellt hat. Die Bespannung 3c weist zwischen dem Wickler 3a und dem Auslenker 3e eine schwache Neigung von oben nach unten in Richtung auf den Warenstapel 2a hin auf. Der Fixierer FP liegt unter dem unteren Eckpunkt des Warenstapels 2a, so daß die herabgestoßenen Warenpäckchen im Taschenbereich auf die etwa um 30° nach außen gegen die Horizontale geneigte Tuchfläche gedämpft abgefangen auftreffen und dann weiter nach außen in den Taschenbereich rutschen, der außerhalb der Fluchtlinie der annähernd vertikalen Leitfläche des Tuches 3c liegt, so daß nachfolgende Päckchen nicht auf dort liegende Waren fallen.

Wenn eine Charge in der Tasche T angesammelt ist, betätigt die zentrale Steuervorrichtung den Wickler 3a, so daß er das Tuch um ein solches Stück aufwickelt, daß der Auslenker 3e und der Spanner 3g angehoben werden und der Taschenboden über den Fixierer (FP) angehoben wird, so daß sich deren Neigung umkehrt und die angesammelte Ware auf die feststehende Rutsche 4a und von dieser auf den Querförderer 5a rutscht, der sie weiterbefördert, wie zuvor beschrieben.

Der zweite Warenstapel 2b ist ebenso mit einem Wickler 3b, einer Bespannung 3d, einem Auslenker 3f, einem Spanner 3h, einer Rutsche 4b und einem Querförderband 5b ausgerüstet. Entsprechendes gilt für die weiteren Doppelregale DR2, DRN.

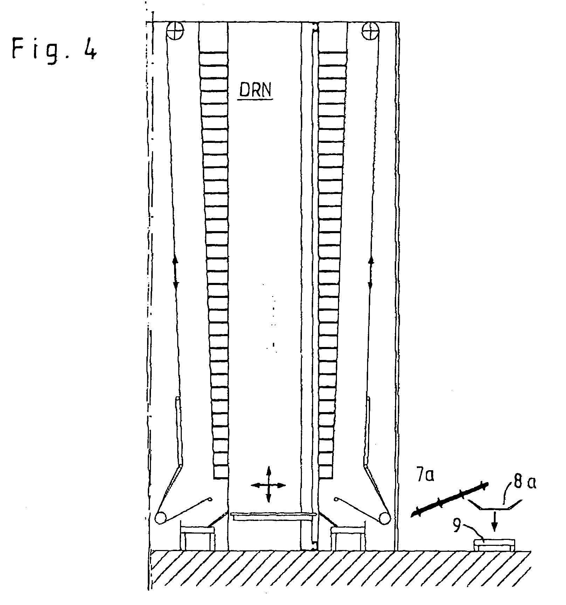

Fig. 4 zeigt das letzte Doppelregal DRN der Anlage, das in Richtung des Sammelförderers liegt. An den Sammelförderer 6a schließt der Stetigförderer 7a an, von dem das Fördergut in den Sammelbehälter 8a übergeben wird, der auf der Behälterförderstrecke 9 zur Ausgabe weiterbefördert wird.

In Fig. 1 und 2 sind weitere Transportwege 10 - 12 dargestellt, die einer redundanten Logistikebene dienen. Dazu ist vorgesehen, daß die Regalförderzeuge RFZ Waren auf mindestens einen Nebenförderer 10, 11 abgeben oder von dort aufnehmen können. Hierdurch kann eine Warenumlagerung oder eine Expreß- oder Notbetriebswarenausgabe erfolgen, wenn das andere Fördersystem überlastet ist oder gewartet wird.

Das gesamte Lager arbeitet vollautomatisch gesteuert. Die eingegebenen Waren, insbesondere Kleinpackungen, werden jeweils an einen vorgegebenen Lagerplatz gebracht und auf Anforderung von dort ausgegeben.

Insbesondere in Apotheken- und Drogeriewarenlagern werden gewöhnlich diverse Produkte in Kommissionen zusammengestellt ausgeliefert. Die vorgesehene Entnahme- und Fördervorrichtung nutzt dies und stellt weitgehend vor Ort die Kommissionen zusammen und fördert sie dann jeweils geschlossen weiter.

So sind Sammelvorgänge in den Taschen T, den Querförderern 5a, 5b, den beiden Sammelförderern 6a, 6b und in den Sammelbehältern 8a, 8b vorgesehen. Letztere sind vorzugsweise mit steuerbaren Schiebern vorgesehen.

Alle Förderer sind mit einer Reversiersteuerung versehen, und sie können völlig unabhängig voneinander gesteuert werden, so daß simultan jeweils mehrere Aufträge über jeweils gesonderte gekettete Wege abgewickelt werden können.

Das Lager benötigt wesentlich weniger Platz als ein von Personen zu begehendes.

Die Entnahmevorrichtung erbringt eine hohe Auslieferungsleistung insbesondere in Stoßzeiten.

Die Redundanzen der Transportmittel 6a, 7a, 8a; 6b, 7b, 8b; 10, 11, 12 erlaubten Prioritäten der Abrufe zu berücksichtigen.

Eine Verteilung gleicher Waren auf verschiedene Regale DR1 - DRN erlaubt eine weitere Parallelisierung und einen redundanten Betrieb bei einer Wartung der Regalförderzeuge RFZ.

## Patentansprüche

1. Lagerautomat zum gesteuerten Stapeln und Entnehmen von Päckchen (P), insbesondere Schachteln, aus Stapeln in Regalen (2a, 2b), die benachbart zu einer Gasse angeordnet sind, in dem ein Regalbedienfahrzeug (RFZ) fährt, das in drei Koordinaten gesteuert aufgelieferte Päckchen (P) jeweils auf einen vorbezeichneten Lagerplatz einlagert und bei entsprechendem Abruf vom jeweiligen Stapel (Regal) (2a, 2b) entnimmt,
dadurch gekennzeichnet, daß an den Stapeln (Regalen) (2a, 2b) abseitig des Regalbedienfahrzeuges (RFZ) jeweils ein Fallschacht für jeweils vom Regalbedienfahrzeug (RFZ) herausgeschobene Päckchen (P) durch eine elastische Bespannung (3c, 3d) begrenzt ausgebildet ist, an deren unteren Ende eine Tasche (T) ausgebildet ist, die sich bis über die annähernd senkrechte Bespannung (3c, 3d) hinaus erstreckt, die mit einem Auffangbereich unterhalb des Stapels (2a, 3a) endet, und daß die Tasche (T) durch eine Entleerungsvorrichtung (3a, 3b) gesteuert auf einen Querförderer (5a, 5b) auszuleeren ist.

2. Lagerautomat nach Anspruch 1, dadurch gekennzeichnet, daß die annähernd senkrechte Bespannung (3c, 3d) jeweils mit einem Auslenker (3e, 3f) oberhalb der Tasche (T) bestückt sind, die mit einem Spanner oder Gewicht (3g, 3h) in einer Auffangstellung so aufgehalten ist, daß der elastische, dämpfende Auffangbereich vom Stapel (Regal) (3c, 3d) weg und nach unten geneigt ist.

3. Lagerautomat nach einem vor vorstehenden Ansprüche, dadurch gekennzeichnet, daß die Bespannung (3c, 3d) sich, den Bereich der Tasche (T) und den Auffangbereich bildend, bis zu einer Fixierung (FP) unterhalb des Stapels (2a, 2b), von diesem beabstandet, erstreckt.

4. Lagerautomat nach einem der vorstehenden Ansprüche, dadurch gekennzeichnet, daß die Bespannung (3c, 3d) am oberen Ende mit einer Hub- oder Wickelvorrichtung (3a, 3b) verbunden ist, die, die Bespannung (3c, 3d) anhebend oder aufwickelnd, die Tasche (T) entleert.

5. Lagerautomat nach Anspruch 4, dadurch gekennzeichnet, daß unter der Fixierung (FP) eine schräge Rutsche angeordnet ist, die auf den Querförderer (5a) führt.

6. Lagerautomat nach einem der vorstehenden Ansprüche, dadurch gekennzeichnet, daß mehrere der Gassen jeweils mit dem Regalbedienfahrzeug (RFZ) mit den benachbarten Regalen und den Fallschächten parallel angeordnet sind und stirnseitig dazu mindestens ein Sammelförderer (6a, 6b) angeordnet ist, der zu einem Sammelbehälter (8a, 8b) führt, der jeweils auf einer Behälterförderstrecke (9) zur Ausgabe zu fördern ist.

7. Lagerautomat nach Anspruch 6, dadurch gekennzeichnet, daß stirnseitig der Gassen ein Zulieferförderer mit Scanner (SC) und ggf. Nebenförderer (11, 12) angeordnet sind, von denen die Regalbedienfahrzeuge (RFZ) Päckchen (P) zur Einlagerung aufnehmen oder diese zu einer Eilausgabe oder Umlagerung ablegen.

8. Lagerautomat nach Anspruch 7, dadurch gekennzeichnet, daß die Nebenförderer (11, 12) auf die Behälterförderstrecke (9) führen.

9. Lagerautomat nach einem der vorstehenden Ansprüche, dadurch gekennzeichnet, daß sämtliche Förderer (5a, 5b; 6a, 6b; 9, 11, 12) eine Richtungsumkehrsteuerung aufweisen und unabhängig voneinander und unabhängig von den Taschen-Entleerungsvorrichtungen (3a, 3b) steuerbar sind, so daß simultan Einlagerungen und Auslieferungen abzuwickeln sind.

10. Lagerautomat nach einem der vorstehenden Ansprüche, dadurch gekennzeichnet, daß die Regale (2a, 2b) sich nach unten hin leicht von der Bespannung (3c, 3d) weggerichtet geneigt sind.
